# EUROPEAN PATENT APPLICATION

(11) **EP 4 650 081 A1**
(43) Date of publication of application: **19.11.2025**
(21) Application number: 24175639.4
(22) Date of filing: 14.05.2024
(51) Int. Cl.: B22D 11/20, G01N 21/952

(54) **INSTALLATION FOR THE MONITORING OF REPRESENTATIVE PARAMETERS OF A CAST BILLET, IN PARTICULAR SURFACE STATE THEREOF, AUTOMATED MONITORING METHOD USING SUCH INSTALLATION AND CASTHOUSE PLANT COMPRISING SUCH INSTALLATION**

(71) Applicant: Dubai Aluminium PJSC, Dubai (AE)
(72) Inventor: ALHAMAD, AYMAN, DUBAI (AE); HUSSAIN, ABID, SHARJAH (AE)
(74) Representative: IXAS Conseil

(57) **Abstract**

This installation comprises a conveyor (2) for conveying said billet along a so-called conveying path (PATH), an orientation assembly (3) for giving at least two different angular orientations of said billet, in a given longitudinal position of said billet, a sensing system (6) adapted to inspect at least part (16, 18) of said peripheral radial surface, in each angular configuration, and a control module (8) comprising a human machine interface, control lines adapted, upon receipt of inputs actuated by an operator, to transmit control orders to at least said conveyor, said orientation assembly and said sensing system, as well as at least one information line adapted to transmit at least information related to said representative parameters, from said sensing system towards said control module (8).

The invention renders first the tasks of the workers far less arduous than in prior art, due to automation. Moreover, the invention confers a far better reliability, with respect to prior art process based on human intervention.

## Description

### Technical field of the invention

The invention relates to casthouse technology, and more precisely to billets produced by casting, in particular vertical semi-continuous casting. It can be applied in particular to billets, made of aluminium and aluminium alloys, but may also be applied to billets made of copper, magnesium and other non-ferrous metals and alloys. The invention pertains to an installation for the monitoring of parameters representative of such a billet, in which numerous individual steps for conveying, sensing and sorting of different billets can be simplified and automatized.

### Prior art

Liquid metal obtained from electrometallurgical or other chemical reduction processes, if not directly used for the manufacturing of castings, needs to be cast into shapes such as rolling ingots and extrusion billets in order to render the metal usable for further processing. Such rolling ingots and extrusion ingots are long parts of constant cross section. They can be obtained by vertical semi-continuous casting, or by horizontal casting.

Vertical semi-continous casting utilizes a mould situated above a casting pit that extends beneath the floor level of the casthouse. The mold is oriented such that the axis of metal flow through the mould is vertical. Usually a plurality of such moulds are provided in a horizontal mould table. The lower component of the mould is a starting block (also called « starting head » or « stool cap »). When the casting process begins, the starting blocks are in their highest upward position and located in the moulds. During casting molten metal is poured onto the upper part of the mould table, where it is carried through a system of branched casting launders to spouts into the mould bores or cavities. The starting block, sitting on the top of a stool, is lowered at a predetermined rate (usually by hydraulic means), and solidified metal emerges from the bottom of the moulds; in this way long ingots or billets are formed which can have a length of more than ten meters, said length being limited by the depth of the casting pit. Their cross section is determined by the mould geometry and is selected in order to suit their intended use. As the external, soldifying surface of the emerging metal strand is cooled (usually by water), this process is therefore called chill casting. The term "billet" is used for ingots having a substantially circular cross section; billets are mainly used for extrusion but may also be used as forging stock.

The above process allows to the manufacture billets of elongated shape, the length of which is typically between 5 meters and 15 meters. Said billet comprises two opposite front ends, as well as a peripheral radial surface. The cross section of said billet is constant over its main longitudinal axis and is typically a circular cross section. Once manufactured, each billet needs to be inspected so as to ensure that it complies with predefined requirements. These requirements concern in particular the surface state of said billet. In case of defects, such as unacceptable scratches, the unsatisfactory billets (or at least defective parts thereof) may be discarded and eventually remelted.

According to the state of the art most of the operations, which are part of the global monitoring method of a billet, are carried out by an operator. In particular an operator carries out a visual inspection of each billet. In case a zone of a billet exhibits inacceptable visible defects, the operator proceeds to a marking of this zone, typically with paint. These marked billets (or at least the marked zones) are then discarded.

Prior art monitoring methods of billets have several disadvantages. Indeed, said monitoring is essentially based on manually operated tasks, which constitute a tedious work. Furthermore, operators may be exposed to elevated temperatures or dangerous products. Operators are also at risk to suffer physical injuries, in particular due to the weight of transported mechanical elements. It should also be noted that the quality of monitoring by a human operator may be variable due to possible lack of attention or occasionally wrong assessment.

As a consequence, there is a need to provide an installation for the monitoring of billets, which makes it possible to remedy to the above drawbacks.

### Objects of the invention

In this respect a first object of the invention is an installation for the monitoring of representative parameters, in particular surface state, of a billet, said billet comprising:
a main longitudinal axis, and
two opposite ends, and
a peripheral radial surface, the cross section of which is substantially constant over the longitudinal axis, in particular circular,
said installation comprising:
- a conveyor for conveying said billet along a so-called conveying path extending along a so-called conveying direction, which is substantially parallel to main axis of said billet in use, and
- an orientation assembly for giving at least two different angular orientations of said billet, in a given longitudinal position of said billet, and
- a sensing system adapted to inspect at least part of said peripheral radial surface, in each angular configuration, and
- a control module comprising:
   a human machine interface, and
   control lines adapted, upon receipt of inputs actuated by an operator, to transmit control orders to at least said conveyor, said orientation assembly and said sensing system, and
   at least one information line adapted to transmit at least information related to said representative parameters, from said sensing system towards said control module.

According to one aspect of the invention orientation assembly comprises lifting means, adapted to lift said billet in said given longitudinal position, said orientation assembly being mobile between a so-called retracted position wherein it is distant from said conveying path, and a so-called protruded position wherein it extends in said conveying path so as to proceed to lifting of said billet.

According to another aspect of the invention orientation assembly comprises a fixed base, which is fixed with respect to conveyor, at least one mobile seat adapted to support said billet in said protruded position, as well as at least one cylinder each adapted to move a respective seat with respect to said base.

According to still another aspect of the invention one amongst body or rod of cylinder is attached to fixed base, whereas the other amongst body or rod of cylinder is attached to a respective seat.

According to still another aspect of the invention orientation assembly comprises rotation means adapted to move said billet between said angular orientations, in said protruded position of lifting means.

According to an advantageous feature orientation means comprise immobilisation means adapted to immobilise said billet in one given angular orientation, in said protruded position of lifting system.

According to an advantageous feature said rotation means and said immobilisation means are so-called combined means, adapted to ensure both rotation and immobilisation function. According to an advantageous feature said combined means comprise, for each seat, at least one engaging wheel adapted to engage with peripheral surface of said billet, in particular at least one friction wheel, said wheel being adapted to have a blocked position wherein it immobilises said billet and to have a rotating position wherein it drives said billet into rotation.

According to an advantageous feature said installation further comprises a robot adapted to move in the vicinity of conveyor, along said conveying direction, said robot comprising coupling system for coupling with sensing system.

According to an advantageous feature, sensing system is adapted to carry out simultaneously a scanning of surface state defects of billet as well as a bow measurement of said billet.

According to an advantageous feature sensing system comprise several sensors, which are provided around conveying path in cross view, in particular in a regular way, each sensor being adapted to project a respective detection beam towards said conveying path.

According to an advantageous feature the main axes of said detection beams join each other in a so-called junction point, in cross view.

In a preferred way six sensors are provided along substantially a half circle extending around conveying path.

According to an advantageous feature control module is configured to determine at least one so-called defect zone of said billet, upon receipt of said information from sensing system.

According to an advantageous feature said installation further comprises removing means adapted to remove said defect zone(s) of said billet, in particular at least one saw.

According to still another aspect of the invention control module is further configured to control said removing means depending upon an individual identifier of said billet and upon location of said defect zone(s).

According to an advantageous feature said installation further comprises unloading system, adapted to unload said billet from said conveyor towards at least one storage area.

A second object of the invention is an automated method for the monitoring of representative parameters, in particular surface state, of a billet, said billet comprising
a main longitudinal axis and
two opposite ends and
a peripheral radial surface, the cross section of which is constant over the longitudinal axis, in particular circular,
said method comprising the following steps, carried out under control of a control module,
- under use of a conveyor, conveying said billet along a so-called conveying path extending along a so-called conveying direction, which is substantially parallel to main axis of said billet in use, and
- under use of an orientation assembly, giving at least two different angular orientations of said billet, in a given longitudinal position of said billet, and
- under use of a sensing system, inspecting at least part of said peripheral radial surface, in each angular configuration, and
- transmitting information related to said representative parameters, towards said control module.

According to an advantageous feature of this method, inspecting at least part of said peripheral radial surface, in each angular configuration, comprises carrying out simultaneously a scanning of surface state defects of said billet as well as a bow measurement of said billet; and

According to an advantageous feature of this method, giving at least two different angular orientations of said billet comprises
- lifting said billet towards a protruded position in which it protrudes at least partly above its conveying path, and
- rotating said billet around its main axis.

According to an advantageous feature of this method, inspecting at least part of said peripheral radial surface, in each angular configuration, comprises
- moving sensing system along said billet immobilised in a first angular configuration, according to a first direction, and
- rotating said billet so as to place said billet in a second angular configuration, and
- moving sensing means along said billet immobilised in said second angular configuration, according to a second direction opposite to the first one; and
- optionnaly rotating said billet so as to place said billet in a third angular configuration and moving sensing means along said billet immobilised in said third angular configuration, according to said first direction.

According to an advantageous feature this method further comprises allocating a unique identifier to said billet.

According to an advantageous feature this method further comprises determining the location of at least one so-called defect region of said billet, upon receipt of said information from said sensing system.

According to an advantageous feature this method further comprises removing defect region(s) upon the basis of data related to said unique identifier and upon the basis of said location of said defect region(s).

According to an advantageous feature this method further comprises, in each angular configuration, positioning sensors, which are part of sensing system, around said billet so that sensing beams of said sensors are projected towards said billet.

According to an advantageous feature of the invention, beams are projected towards said billet so that two adjacent beams overlap at the surface of said billet.

According to an advantageous feature of the invention, said determining the location of at least one so-called defect region comprises, under control of said control module (8), an assessment of the detected defects and a decision whether a defect is acceptable or unacceptable.

A third object of the invention is a casthouse plant, comprising a manufacturing zone (1000) for manufacturing billets, as well as a monitoring installation (I) as above defined.

### Brief description of figures

Figure 1 is a perspective view, showing a typical billet which is likely to be monitored in an installation according to the invention.
Figure 2 is a perspective view, showing a monitoring installation according to the invention.
Figures 3 and 4 are respectively a perspective view and an end view, showing at greater scale an orientation assembly which is part of the monitoring installation according to the invention.
Figure 5 is a perspective view, showing at a greater scale a robot which is part of the monitoring installation according to the invention.
Figure 6 is a cross section, showing at a greater scale sensing system which is part of the monitoring installation according to the invention, the billet monitored by said sensing system being in the centre.
Figure 7 is a cross section and represents a zoom of figure 6, showing at a much greater scale different detection beams on a billet, said detection beams being projected by sensors part of sensing system of figure 6.
Figure 8 is a schematic view, showing from top the installation according to the invention, as well as a chart flow of billets which enter this installation and exit the same.
Figure 9 is a schematic view, illustrating the control system which is part of the monitoring installation according to the invention.
Figure 10 is a perspective view, analogous to figure 2, showing the arrival of a billet to be processed on the monitoring installation of the invention.
Figure 11 is a perspective view, analogous to figure 10, showing the lifting of said billet.
Figure 12 is a perspective view, analogous to figures 10 and 11, showing the motion of the sensing system along said billet.
Figures 13 is a perspective view, analogous to figures 10 to 12, showing the sensing system at the end of its motion of figure 12, as well as the rotation over 180° of said billet.
Figure 14 is an end view, analogous to figure 4, illustrating in greater detail said rotation of said billet according to figure 14.
Figure 15 is a perspective view, analogous to figures 10 to 13, showing the motion of sensing system along said billet in an opposite direction with respect to figure 12.
Figures 16 to 19 are schematic front views, illustrating four billets with different defects types detected according to the invention, as well as four ways to process with these billets.
Figures 16a to 19a are schematic front views, illustrating the billets of figures 16 to 19 after the processing carried out with reference to these figures 16 to 19.

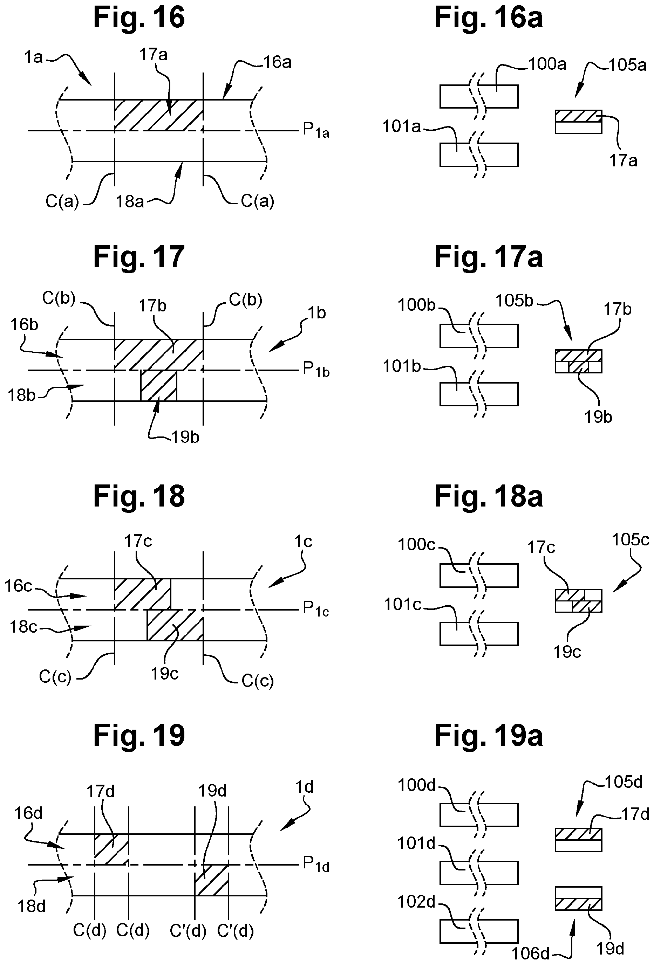

The following reference numerals are used throughout the present description.
1 billet - X1 main axis - P1 horizontal median plane - 10 peripheral surface - 11, 12 opposite front ends - 14 identifier - 16, 18 halves of surface 10
I installation according to the invention
2 conveyor - 21-25 conveying units - 211-214 posts of a conveying unit - 215 table of a conveying unit - 216 conveying rollers - PATH conveying path
3 orientation assembly - 30, 31 base blocks - 300 intermediate rail - 32,33 seats - 34 cylinder - 340 body of 34 - 341 rod of 34 - 35 roller - 36 brake - 37 wheel
4 support - 40, 41 end masts - 42 crossbar - X42 main direction of 42 - 43 carrier - X43 motion of 43 - 44 driving system of 43
5 robot - 50 base plate - 51 body - A51 rotation axis of 51 - 52 proximal arm - A52 rotation axis of 52 - 54 distal arm - X54 rotation axis of 54 - 56 coupling
6 sensing system - 60 housing - 61 top wall of 60 - 62, 63 longitudinal walls of 60 - 71 to 76 sensors - 710 to 760 sensing members - 715 to 765 detection beams - X71 to X76 main axes of beams - A71 to A76 detection angles of beams - 071 to 075 offset between adjacent axes
8 control module - 80 computer - 81 information region of 80 - 82 to 85 information connection lines between 81 and members 1300, 1400 and 71 to 76 of the installation - 90 data storage area of 80 - 91 control region of 80 - 92 to 98 control connection lines between 91 and members 228, 34, 36, 37, 44, 5 and 1130, 1230 of the installation
1000 casting unit
1100, 1200 storage areas - 1110, 1210 stands - 1120, 1220 unloading devices - 1130, 1230 saws
1300 identification camera
1400 stroke end camera
B1 to B6: successive motions of billet 1
Fx motions of member x, with x = 6, 32, 33, 43
F'6 and F'43 opposite motions of members 6 and 43
1a to 1d billets on figures 16 to 19 - 17a to 17d defects on half 16a to 16d - 19a to 19d defects on half 19a to 19d - C(a) to C(d) and C'(d) cutouts - 100a to 100d, 101a to 101d, 102d parts of billet without defects after cutouts - 105a to 105d, 106d parts of billet with defects after cutouts.

### Detailed description of the invention

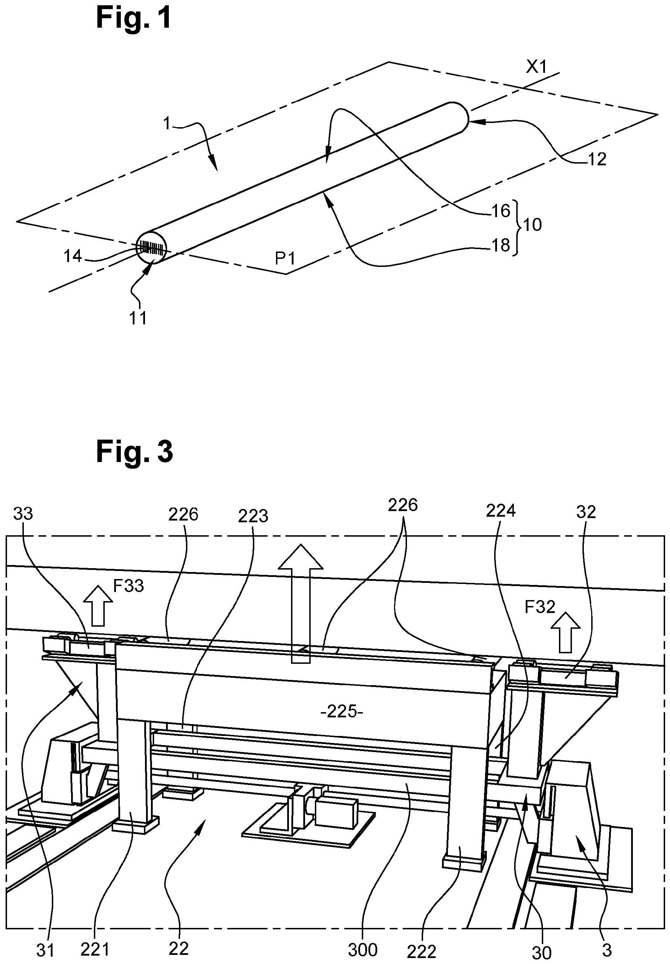

The present invention deals with the monitoring and, in particular, with the surface inspection of a billet, such as a cast billet. Such a billet, which is known as such, is illustrated on figure 1. Said billet, referenced 1 as a whole, is an elongated body of substantially constant cross-section, with a main longitudinal axis X1. Let us also note 11 front longitudinal end as well as 12 opposite rear longitudinal end of this billet, with reference to its motion along installation of the invention.

Let us also note 10 peripheral radial surface of this billet 1, which can be divided into two halves namely an upper half 16 and a lower half 18 on this figure 1. These halves are located on both sides of a so-called horizontal median plane P1 of the billet 1. In a way known as such, the cross section of this peripheral surface is constant over the longitudinal axis X1, typically with a cylindrical shape. However other shapes of billets are at least in theory possible, such as oval or rectangular (in this case preferably with rounded edges).

According to an advantageous feature of the invention, billet 1 is provided with at least one individual identifier, or identification code, which makes it possible to be distinguished from any other billet. Said at least one identification code can be of any suitable type, such as a bar code, a QR code, an alphanumerical code, and it can be of any suitable kind, such as an affixed label printed on a suitably heat-resistant material. In a first embodiment, this identifier, which is schematically represented and is referenced 14, is an engraved code (for example by laser engraving). In a second embodiment, this identifier, or at least part of it, is engraved in the upper surface of the starting head and will be transferred upon casting to the surface of the foot of the billet; this allows to identify a billet with respect to the starting head which has been used for casting. More than one types of identifiers can be combined, such as an identifier accoding to said second embodiment and and an identifier according to said first embodiment; this combination leads advantageously to a unique identification of each billet.

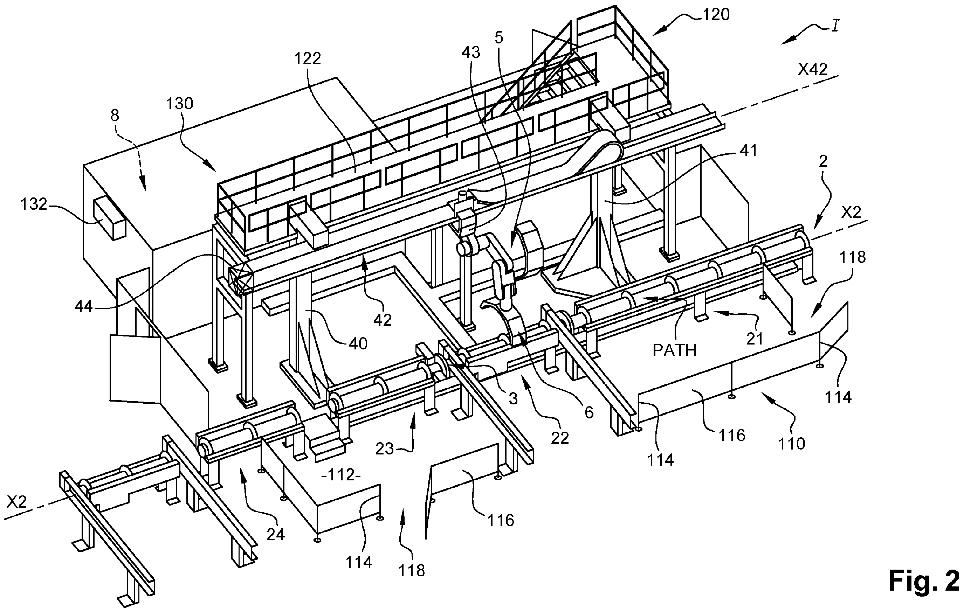

Figure 2 generally illustrates the monitoring installation according to the invention, which is referenced I as a whole. This installation I essentially comprises:
- a conveyor 2 for conveying billet 1 along its main direction,
- an orientation assembly 3 for giving said billet at least two different angular configurations,
- a support 4,
- a robot 5 supported by and mobile with respect to said support,
- a sensing system 6 held by said robot, for sensing parameters of said billet,
- a control module 8.

Still referring to figure 2, conveyor 2 comprise several conveying units, in the illustrated example five units 21 to 24. The latter extend the one behind the others, along a longitudinal direction noted X2 on this figure 2. The superior surface of said units form a so-called conveying surface of billet 1, immediately above which extends a so-called conveying path noted PATH.

With reference to figure 3, one unit 22 will now be described more in detail, bearing in mind that in this example all conveying units have the same structure. Said conveying unit 22 comprises four posts 221 to 224, upon which rests a table 225. The latter is provided with conveying rollers 226 which are driven into rotation by any appropriate system.

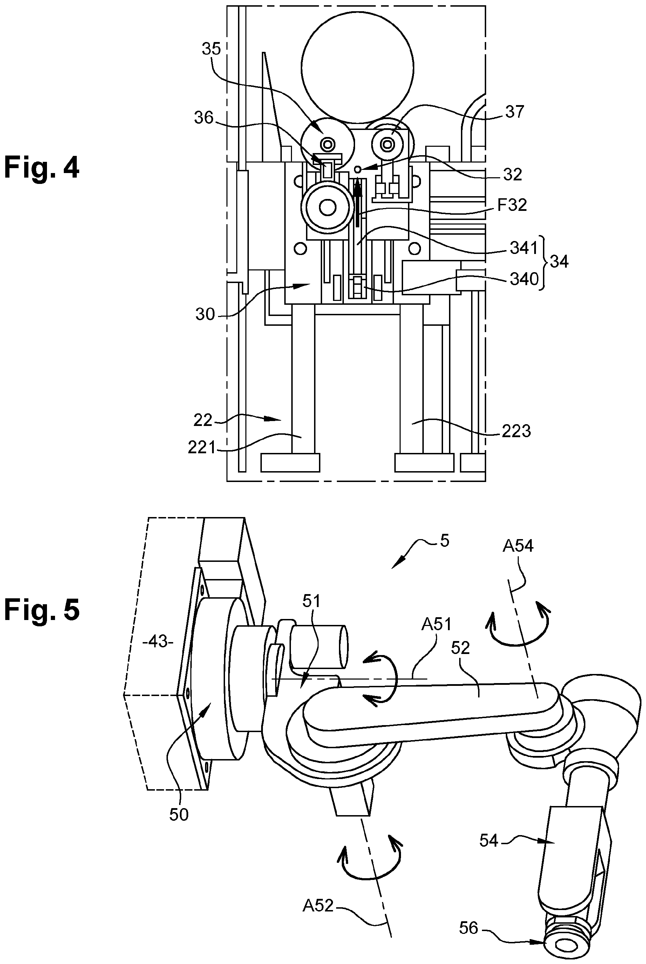

Referring now in particular to figures 3 and 4, orientation assembly 3 first comprises two fixed base blocks 30 and 31, which are located on either side of intermediate conveying unit 22. These blocks are linked by a junction rail 300 extending under table 225, which is part of said conveying unit 22. Each block 30 and 31 supports a respective seat 32 and 33, each mobile with a possibility of vertical translation illustrated by arrows F32 and F33. Figure 4 illustrates more in detail the structure of block 30 and seat 32, bearing in mind that block 31 and seat 33 have the same structure.

Said seat 32 is mobile with respect to fixed block 30, via a hydraulic cylinder 34, the body 340 of which is attached on block 30 whereas the rod 341 of which is attached on seat 32. Moreover seat 32 is provided first with a roller 35, which is mounted in an idle way with respect to said seat, around a rotation axis which is parallel to conveying direction of billet 1. Said roller may be stopped in position, by a pneumatically actuated brake 36. On the other hand seat 32 is also provided with a wheel 37, which is mounted around a rotation axis parallel to the one of roller 35. Contrary to roller 35, wheel 37 may be driven by an appropriate motor.

In use, seats 32 and 33 are mobile between two positions. In a first so-called retracted position, these seats are lowered so that do not interfere with the longitudinal motion of the billet 1 along the plurality of conveying units. On the other hand, in a so-called protruded position, said seats are elevated according to arrow F32 on figure 4, so that they are adapted to lift billet with respect to conveying rollers 226. In this position, as will be described in further detail hereafter, wheel 37 is also adapted to drive said billet into rotation around its main axis.

Turning back to figure 2, support 4 comprise two end masts 40 and 41, which are mutually linked by a crossbar 42. Moreover, a carrier 43 is slidably mounted on said crossbar, along main horizontal direction X42 of the crossbar, which is parallel to conveying direction of the billet 1. Driving system of any appropriate type, which are not shown on figure 2, enable the motion of carrier 43 with respect to crossbar 42.

As can be seen at a greater scale on figure 5, robot 5 comprises a base plate 50, which is attached to carrier 43 (schematically shown in dotted lines) by any appropriate system. Advantageously there is no degree of freedom between said plate and said carrier. Said base plate 50 supports a body 51 which is adapted to rotate around the axis A51, with respect to said base plate. A proximal arm 52 is mounted on said body 51, while being adapted to rotate with respect to the latter, around an axis A52. which is adapted to rotate around a substantially horizontal axis A52, with respect to said base plate. A distal arm 54 is mounted on said proximal arm 52, while being adapted to rotate with respect to the latter, around an axis A54. Said arm 54 is provided with an appropriate coupling 56, which makes it possible to handle sensing system 6 as detailed hereafter.

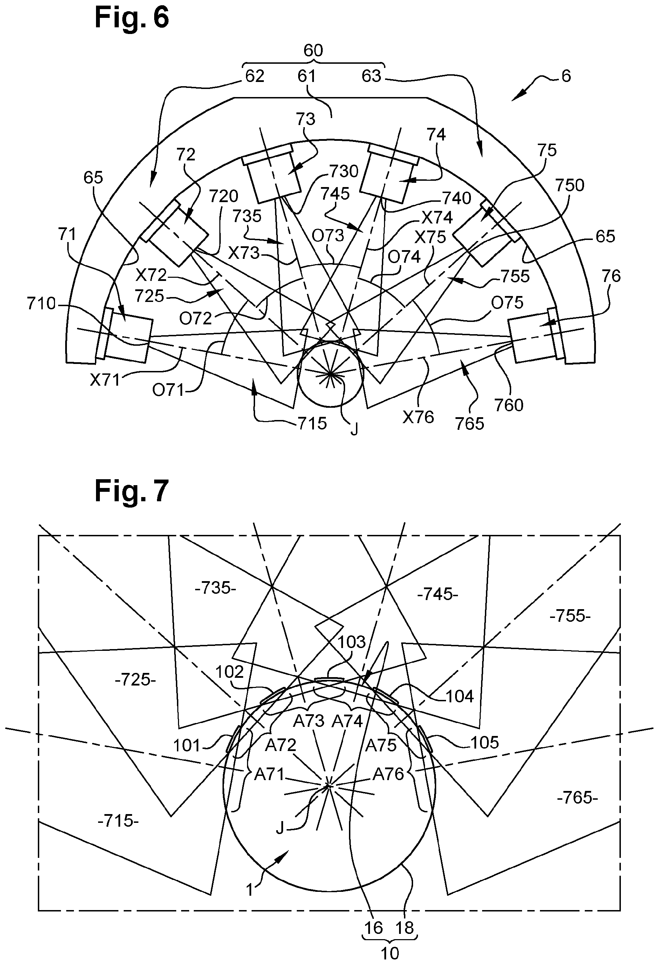

Referring now in particular to figures 6 and 7, sensing system 6 comprise first a housing 60, which is shaped as a hollow body. Said housing 60 is provided with a flat so-called top wall 61, from which extend two opposite so-called longitudinal walls 62 and 63, which are substantially parallel to main axis of billet in use. Said walls 62 and 63 are globally round shaped, so as to cooperate with the peripheral surface 12 of billet 1. Sensing system 6 is also provided with a plurality of individual sensors, in the illustrated example six of such sensors which are referenced 71 to 76. Each sensor comprises an elongated body, which is attached by any appropriate system on inner face 65 of housing 60. Said body carries a respective sensing member 710 to 760, adapted to send a detection beam 715 to 765 towards billet 1 in use.

Said sensing member, which is known as such, is for example of the type manufactured by Firm LMI Technologies under Trade Reference GOCATOR 2340. This plurality of sensors are adapted to acquire a point cloud in which several defects of the peripheral surface 10 of billet 1 can be detected. By way of example, the resolution of each GOCATOR 2340 sensor is 0.17 millimetres (mm) for the location and 0.037 mm in the radial direction, which ensures that visual defects above a size of about 0.5 × 0.5 × 0.1 mm can be detected.

Figures 6 and 7, which are called a cross view with reference to the conveying direction of billet 1 in use, illustrate in particular the geometric positioning of sensors 71 to 76. The latter are positioned on the walls of the housing 60 along substantially half a circle, with a regular angular distribution. Let us note:
- X71 to X76 the main axes of beams 715 to 765 which mutually join in a so-called junction point J which substantially corresponds to the centre C1 of billet 1
- A71 to A76 the detection angles of each beam 715 to 765, namely the circumflex fraction of billet 1 (in other words the fraction of peripheral surface 10) detected by each beam
- 071 to 075 the offset between main axis X71 to X75 of each beam 715 to 755 with respect to axis X72 to X76 of respective adjacent beam 725 to 765.

According to an advantageous feature of the invention, A71 to A76 are superior to 071 to 075 so as to delimit overlapping areas 101 to 105, part of peripheral surface 10 of billet 1.

In a typical way, as shown in particular on figure 7, the different detection angles A71 to A76 are mutually equal and, as a nonlimiting example, are about 40°. Also, in a typical way, the different offsets 071 to O76 are mutually equal and, as a nonlimiting example, are about 32°. Under these circumstances, each sensor inspects a circumflex portion of 40°, with overlapping areas 101 to 105 which extend each over circumflex portions of 4°. The global inspected portion of peripheral surface 10 is slightly superior to 180°, in the present example about 184°.

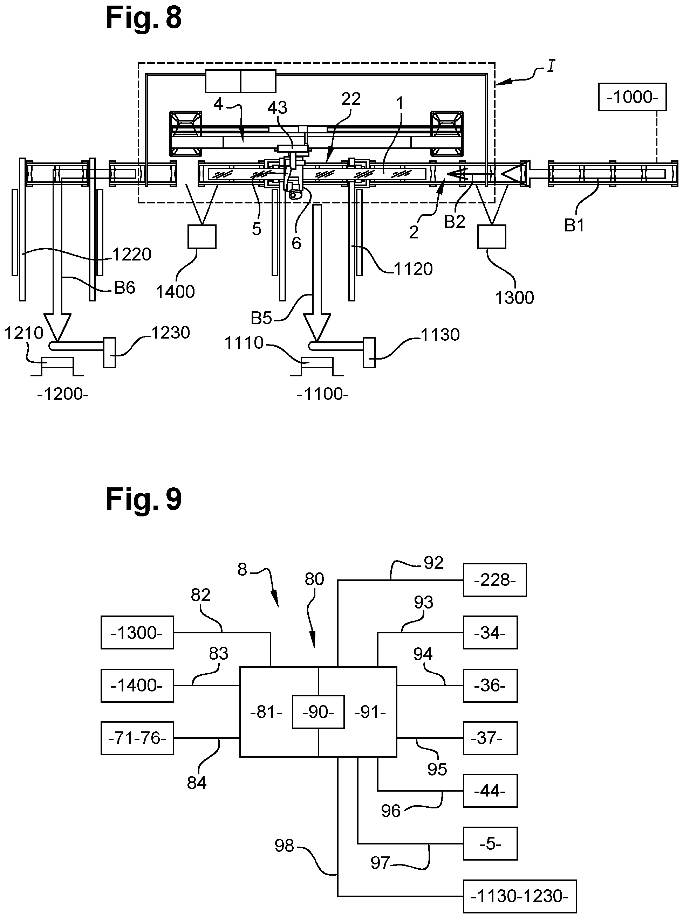

Figure 8 illustrates a global integration of the monitoring installation I according to the invention, into a casthouse plant. A casting unit, ensuring in a classical way the manufacturing of a plurality of billets, such as the one 1 of figure 1, is very schematically illustrated and given reference 1000. A first storage area 1100 faces conveying unit 22, whereas a second storage area 1200 is provided downstream installation I.

Each storage area 1100, 1200 is provided with a schematically shown respective stand 1110, 1210 which can receive billet from an unloading device 1120, 1220. The latter, which is known and as such and will not be described in further detail, makes it possible to lead billet from conveyor 2 to stand 1110, 1210 in particular by gravity. Moreover, each storage area is equipped with a saw 1130, 1230 of any appropriate type. The latter, which is very schematically represented, is adapted for cutting billet so as to remove at least part thereof.

Figure 8 also shows a so-called identification camera 1300, located upstream monitoring installation I, which is adapted to detect identifier 14 provided on billet 1. Said camera, of any appropriate type, is linked to computer 80 which is adapted to execute a suitably configured identification software, in use. In addition, figure 8 illustrates a so-called stroke end camera 1400, located downstream installation I, which is adapted to detect the arrival of front end 11 of billet 1.

Turning back to figure 2, installation according of the invention also comprises secondary devices which are optionally provided. Figure 2 illustrates a peripheral fence 110, defining a so-called inspection area 112. Said fence comprises a plurality of vertical posts 114, which support grid members 116. Several gates 118 are provided in the grid members so as to permit entrance of operators into inspection area 112, in particular in case of faults or maintenance works.

Figure 2 also represents a maintenance platform 120, which is provided beside horizontal bar of support 3. This platform 120, which is provided in a classical way with stairs and protection barriers, defines in particular a maintenance path 122 which allows operators access to the components in particular in case of maintenance works.

Finally, installation of the invention comprises a shed 130, provided immediately outside peripheral fence, opposite to conveying system. Said shed 130 accommodates in particular not shown members of control system 9, air cooling device 132 which is schematically represented, as well as some other not shown devices well known from those skilled in the art.

Control module 8, shown on figure 9, comprises first a human machine interface, in the form of a computer 80 intended to receive inputs from an operator. Said computer is associated with Programmable Logic Controller (abridged PLC), with a motor control center (abridged MCC) as well as with artificial vision device. Computer 80 may be schematically divided into three regions, namely a so-called information region 81 adapted to receive information from some structural members of the installation through information lines, a so-called control region 91 adapted to send control orders towards some other structural members of the installation through control lines, as well as a data storage region 90.

More in detail a first information line 82 connects computer 80 with first camera 1300, whereas another information line 83 connects said computer with second camera 1400. provided on the table assembly. A further information line 84 connects computer with sensors 71 to 76, which are part of sensing system.

On the other hand, first control line 92 connects computer with conveyor 2, in particular the driving means 228 which enable the actuation of conveying rollers. Several lines connect computer 80 with some members of orientation assembly 3, namely line 93 with cylinder 34, line 94 with brake 36 and line 95 with friction wheel 37. A further line 96 connects said computer with driving means 44 of carrier 43, another line 97 connects computer with robot 5, whereas still a further line 98 connects computer with saws 1130, 1230.

An implementation of the above installation, according to the invention, will now be described.

Billet 1 is manufactured in casting unit 1000 and then driven to installation I by any appropriate system, this motion being shown by arrow B1 on figure 9. Camera 1300 reads the specific identifier 14 associated to said billet and sends the corresponding information to control module 8, via line 82. This information, concerning the specific identity of billet 1, is stored in data storage region 90 of computer 80.

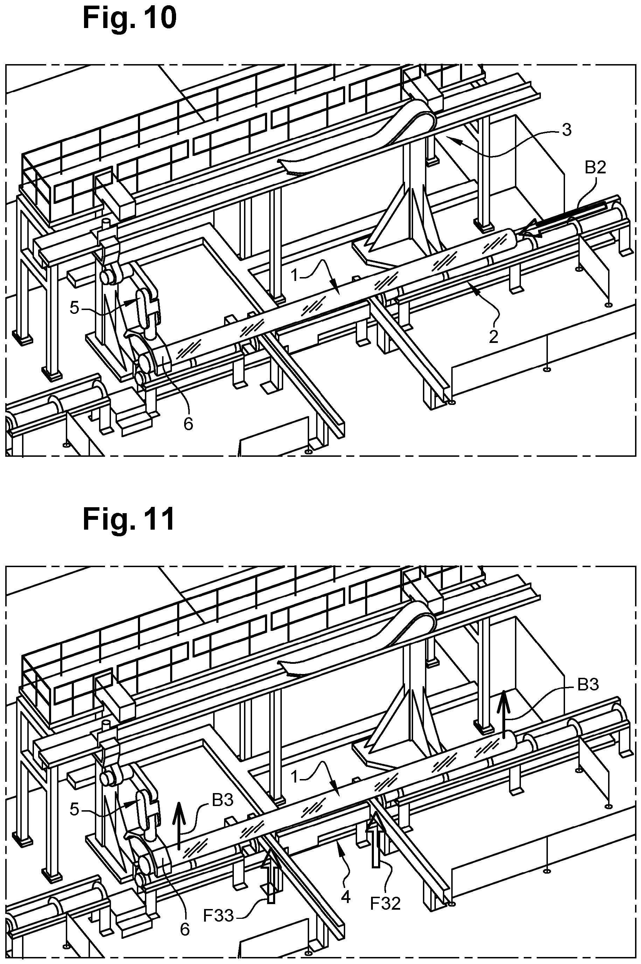

Billet 1 is then fed to conveyor 2, which ensures its forward motion along conveying path to fully shown by arrow B2 on figure 8. This step is also illustrated on figure 10, with the presence of the same arrow B2. When camera 1400 detects the arrival of end 11, it sends the corresponding information to control module 8 via line 83. This module then controls the stop of conveying rollers, via line 92, so as to immobilise billet in its position of figure 11.

Still referring to figure 11 module 8 controls the cylinder 34 so as to ensure lifting of billet 1, according to arrow B3, while this billet remains immobilised in its longitudinal position. During this operation, seats 32 and 33 are moved upwards from their retracted position to their protruded position, by actuation of said cylinder 34. This motion is illustrated by arrows F32 and F33. Brake 36 is then actuated, so as to prevent any motion of friction wheel 37. This ensures a reliable immobilisation of billet, both with respect to translation and rotation. As shown also on figure 11, robot 5 drives sensing system 6 close to one end of billet 1, i.e. end 11 in the illustrated example. The position of sensors 71 to 76 is adjusted with respect to peripheral surface 10, in view of a satisfactory surface state detection thereof.

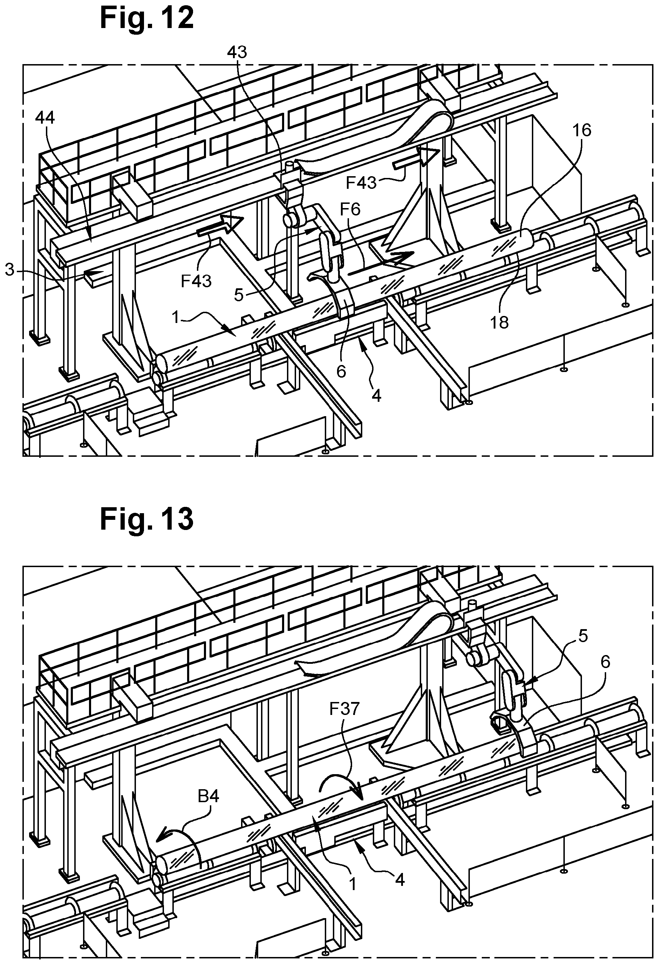

Referring now to figure 12 control module 8 controls model 44 via line 96, so that carrier 43 is driven along crossbar 42 according to arrows F43. This brings about a corresponding motion of robot 5, as well as of sensing system 6 according to arrows F6. During this displacement, those skilled in the art will take the necessary precautions so as to maintain appropriate relative orientation between billet 1 and sensors 71 to 76. The motion of sensors 71 to 76, described in reference to figure 12, corresponds to defect detection of the first half 16 of the peripheral surface 10 of billet 1.

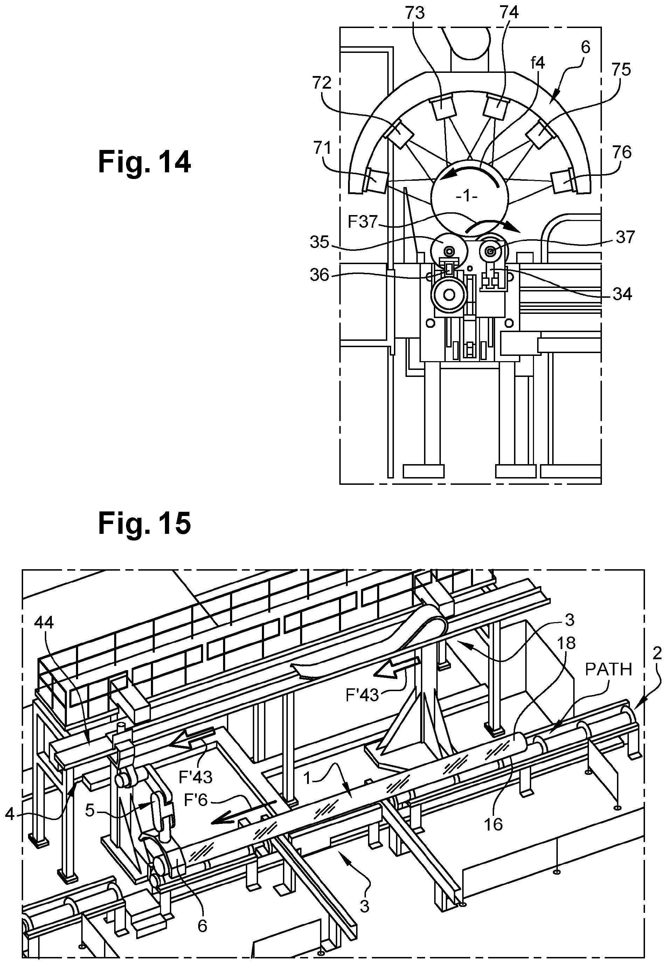

Once sensing system 6 has reached rear end 12 of billet 1, module 8 controls the stop of carrier 43 as well as of robot 5, so as to maintain sensing system in its position as shown on figure 13. Wheel 37 is then driven into rotation as shown on figure 14, according to arrow F37. Since the surface of said wheel is of the friction type, it engages the peripheral surface of billet 1, which induces the corresponding rotation of billet around its main axis, according to arrow B4.

After this rotation, as shown on figure 15, second half 18 of billet 1, which was originally located downwards, is now turned upwards. According to the next step of the invention, carrier 43 is now driven along crossbar 42 according to arrows F'43, namely in an opposite direction with respect to the motion of figure 12. This brings about a corresponding motion of robot 5, as well as of sensing system 6 according to arrows F'6, also opposite with respect to figure 12. This makes it possible to detect defaults of said second half 18 of the peripheral surface 10 of billet 1.

Once sensing system 6 has returned close to front end 11 of billet 1, module 8 controls the stop of robot 5. Cylinder 34 is then actuated downwards, namely in an opposite direction with respect to figure 11. This moves seats 32 and 33 back to their retracted position, so that they do not interfere any more with the motion of the billet. The latter can then be fed towards one of the storage areas 1100 or 1200, along to arrows B5 or B6 on figure 8, for a further processing that will be described hereafter.

During the steps described with reference to figures 12 and 15, sensing system 6 sends information related to the thus detected defects to control module 8, via line 84. On the basis of this information, control unit stores a mapping of billet 1 with localisation of the defects, on each half 16 and 18. Said mapping may be one of those illustrated on figures 16 to 19. Let us suppose that billets 1a to 1d, shown on these figures 16 to 19, have been unloaded from conveyor 2 towards stand 1110. Each of these billets can therefore be processed, using saw 1130.

Figure 16 represents, in part and at a greater scale, a billet 1a the first half 16a thereof comprises a so-called defect zone 17a detected by sensors 71 to 76, according to the above described steps. On the other hand, second half 18a is without any defect zone. Under these circumstances module 8 controls saw 1130 so as to proceed with a pair of cutouts referenced C(a) on either side of defect zone 17a.

As shown on figure 16a, billet 1a is thus divided into three parts, namely two so-called functional parts 100a and 101a, without any defect, as well as a so-called reject part 105a comprising defects. Depending on their length, functional parts may be either used as such, or further cut to a desired length. On the other hand, reject part is discarded and may eventually be remelted. The same situation may apply in case of a symmetry with respect to a median horizontal plane of the billet, namely if only second half 18b comprises defects whereas first half 18a is without any defect.

Figure 17 represents a billet 1b, both first half 16b and second half 18b thereof comprise respective defect zones 17b and 19b. In this case, second defect zone 19b is entirely included into first defect zone 17b. In other words the opposite sides of the largest defect zone 17b extend beyond opposite sides of the smallest defect zone 19b.

Under these circumstances, in the same way as in figure 16, module 8 controls saw 1130 so as to proceed with a pair of cutouts referenced C(b) on either side of defect zone 17b. As shown on figure 17a, billet 1b is thus divided into two functional parts 100b and 101b, without any defect, as well as a reject part 105b comprising defects. The same situation applies in case of a symmetry with respect to median horizontal plane of the billet, namely if second defect zone 19b extends on both sides of first defect zone 17b.

Figure 18 represents a billet 1c, both first half 16c and second half 18c thereof comprise respective defect zones 17c and 19c. Contrary to the case illustrated on figure 17, first defect zone 17c extends beyond second defect 19c zone along a first direction, namely to the right. On the other hand, second defect zone extends beyond the first defect zone along the opposite direction, namely to the left.

Under these circumstances module 8 controls saw 1130 so as to proceed with a pair of cutouts referenced C(c), on protruding sides of each defects zone. As shown on figure 18a, billet 1c is thus divided into two functional parts 100c and 101c, without any defect, as well as a reject part 105c comprising defects. The same situation applies in case of a symmetry with respect to median horizontal plane of the billet, namely if first defect zone 17c extends beyond second defect zone 19c to the left, whereas second defect zone extends beyond first defect zone to the right.

Figure 19 represents a billet 1d, both first half 16d and second half 18d thereof comprise respective defect zones 17d and 19d. Contrary to the cases illustrated on figures 17 and 18, the two defect zones do not mutually overlap. In other words, first 17d and second 19d defect zones extend over first and second regions of billet, which are mutually distant.

Under these circumstances module 8 controls saw 1130 so as to proceed, not only with one single pair of cutouts like in cases of figures 16 to 18, but with two distinct pairs of cutouts referenced C(d) and C'(d). First pair of cutouts C(d) is carried out on either side of first defect zone 17d, whereas second pair of cutouts C'(d) is carried out on either side of second defect zone 19d. As shown on figure 19a, contrary to cases of figures 16a to 18a, billet 1d is thus divided into five parts, namely three functional parts 100d, 101d and 102d without any defect, as well as two reject parts 105d and 106d comprising defects.

While implementing the above described operations, ambient temperature may undergo rises or drops that are likely to bring about sensing errors. To avoid this phenomenon, when a not shown appropriate temperature sensor has detected a temperature variation which is superior to a predetermined threshold, sensing system are submitted to a so-called recalibration in a way known as such.

In the above described implementation example of the invention, detection comprises two successive steps. In a first one, substantially a first half of the billet periphery undergoes detection using sensing system. Afterwards billet is rotated of substantially 180°, and the other half of its periphery is submitted to defect detection.

According to not shown variants, detection may comprise more than these two steps. Indeed, according to one possibility, this detection may comprise three steps, during each one third of billet periphery is inspected. Between two successive detection steps, billet is rotated of substantially 120°. According to another possibility, four steps may be carried out, during each one quarter of billet periphery is inspected. in this case, billet is rotated of substantially 90° between two successive steps. Some other possibilities may be considered, with still more successive inspection steps.

In an embodiment of the invention, control module 8 carries out an assessment of the detected defects and decides whether a defect is acceptable or unacceptable. In this case, the definition of a "defect zone" may be limited to unacceptable defects. On the other hand a so called acceptable zone with acceptable (but detectable) defects may not need to be cut out.

The above example was described and illustrated with reference to the monitoring of defects, likely to appear at the surface of a billet. However, the present invention also encompasses the monitoring of other representative parameters of said billet. By way of non-limiting example, the invention makes it possible to also monitor the bow measurement of said billet. In this respect, sensors 71 to 76 of the illustrated example are also adapted to measure the bow of billet. Bow measurement and scanning of surface state defects are therefore carried out simultaneously.

In this respect, we describe thereafter an example of the way the diameter of the billet may be measured. During the scanning step of the billet, described hereabove in great detail, sensors gives several so-called instantaneous values of the diameter. One given set of instantaneous values is related to a given slice of the billet, bearing in mind that sensors move along the billet during the scanning process.

For one given slice, the six sensors provide a given set of instantaneous values, i.e. six different values. As local defects may impact the local diameter measurements, these six values are advantageously sorted out. These six measurements are sorted regarding the measured diameter value. Then for the sensors respectively 71 to 74, 72 to 75 and 73 to 76 the average and the standard deviations of the diameters are calculated. The average with the smallest standard deviation shows the smallest valuation of the used radioactivity diameter measurements. So the two biggest deviations are sorted out, even if all measurements are quite accurate.

Since the present invention encompasses a first scanning of the first half and then a second scanning of the second half of the billet, two values of diameter are measured for each slice. The first value corresponds to the scanning of first half, whereas the second value corresponds to the scanning of second half. These two obtained values are averaged, for example by taking a mean value thereof, the final result giving the diameter of the given slice. Obtaining different values of the diameters of the different slices makes it possible to identify a potential variation of the bow of the billet.

The invention brings about several advantages with respect to the prior art monitoring of the surface state of the billet. as explained above, prior art processes are essentially based on manual operations. The installation and method according to the invention enable the user to facilitate this monitoring, based on a global automation.

The invention renders first the tasks of the workers far less arduous than in prior art, due to this automation. In particular, lifting operations of heavy loads are carried out by mechanical members of the installation. In addition the invention makes it possible to protect these workers from potentially dangerous products. In this respect it shall be noted that painting step of billet, carried out in prior art, is suppressed according to the invention.

Moreover, the invention confers a far better reliability, with respect to prior art process based on human intervention. Indeed, some of the steps, part of monitoring method according to the invention, are render much more accurate due to automation. Amongst other, step of identifying defect zones of billet is given a far better precision, since manual painting of prior art is replaced by automated mapping according to the invention.

Individual identification of certain components, in particular the fact to allocate a unique identification code to billet, is specifically advantageous. This makes it possible to keep track of said billet, both for the sake of localisation within the workshop and for the sake of tracking it history of use.

## Claims

1. An installation (I) for the monitoring of representative parameters, in particular surface state, of a billet (1), said billet comprising:
a main longitudinal axis (X1), and
two opposite ends (11, 12), and
a peripheral radial surface (10), the cross section of which is substantially constant over the longitudinal axis, in particular circular,
said installation comprising:
- a conveyor (2) for conveying said billet along a so-called conveying path (PATH) extending along a so-called conveying direction (X2), which is substantially parallel to main axis of said billet in use, and
- an orientation assembly (3) for giving at least two different angular orientations of said billet, in a given longitudinal position of said billet, and
- a sensing system (6) adapted to inspect at least part (16, 18) of said peripheral radial surface, in each angular configuration, and
- a control module (8) comprising:
a human machine interface (80), and
control lines (92 - 98) adapted, upon receipt of inputs actuated by an operator, to transmit control orders to at least said conveyor, said orientation assembly and said sensing system, and
at least one information line (84) adapted to transmit at least information related to said representative parameters, from said sensing system towards said control module (8).

2. An installation according to claim 1, wherein orientation assembly (3) comprises lifting means (30, 31, 32, 33, 34), adapted to lift said billet (1) in said given longitudinal position, said orientation assembly being mobile between a so-called retracted position wherein it is distant from conveying path (PATH), and a so-called protruded position wherein it extends in said conveying path so as to proceed to lifting of said billet.

3. An installation according to claim 2, wherein orientation assembly (3) comprises a fixed base (30, 31), which is fixed with respect to conveyor (2), at least one mobile seat (32, 33) adapted to support said billet in said protruded position, as well as at least one cylinder (34) each adapted to move a respective seat with respect to said base, one amongst body (340) or rod (341) of cylinder (34) being in particular attached to fixed base, whereas the other amongst body (340) or rod (341) of cylinder (34) is in particular attached to a respective seat, and wherein orientation assembly further comprises rotation means (37) adapted to move said billet between said angular orientations, in said protruded position of lifting means, and wherein orientation means comprise immobilisation means (37) adapted to immobilise said billet in one given angular orientation, in said protruded position of lifting system.

4. An installation according to claim 3, wherein said rotation means and said immobilisation means are so-called combined means (37), adapted to ensure both rotation and immobilisation function, said combined means comprising for example, for each seat, at least one engaging wheel (37) adapted to engage with peripheral surface (10) of said billet, in particular at least one friction wheel (37), said wheel being for example adapted to have a blocked position wherein it immobilises said billet and to have a rotating position wherein it drives said billet into rotation.

5. An installation according to any of claims 1 to 4, further comprising a robot (5) adapted to move in the vicinity of conveyor (2), along said conveying direction (X2), said robot comprising coupling system (56) for coupling with sensing system (6).

6. An installation according to any of claims 1 to 5, wherein sensing system is adapted to carry out simultaneously a scanning of surface state defects of billet as well as a bow measurement of said billet.

7. An installation according to any of claims 1 to 6, wherein sensing system comprise several sensors (71 - 76), which are provided around conveying path (PATH) in cross view, in particular in a regular way, six sensors being for example provided along substantially a half circle extending around conveying path, each sensor being adapted to project a respective detection beam (715 - 765) towards said conveying path, wherein the main axes (A71 - A76) of said detection beams preferably join each other in a so-called junction point (J), in cross view.

8. An installation according to any of claims 1 to 7, wherein control module (8) is configured to determine at least one so-called defect zone (17, 19) of said billet, upon receipt of said information from sensing system.

9. An installation according to any of claims 1 to 8, further comprising removing means (1130, 1230) adapted to remove said defect zone(s) of said billet, in particular at least one saw, control module (8) being in particular further configured to control said removing means depending upon an individual identifier (14) of said billet and upon location of said defect zone(s).

10. An automated method for the monitoring of representative parameters, in particular surface state, of a billet (1), said billet comprising
a main longitudinal axis (X1) and
two opposite ends (11, 12) and
a peripheral radial surface (10), the cross section of which is constant over the longitudinal axis, in particular circular,
said method comprising the following steps, carried out under control of a control module (8),
- optionally, allocating a unique identifier to said billet, and
- under use of a conveyor, conveying said billet along a so-called conveying path extending along a so-called conveying direction, which is substantially parallel to main axis of said billet in use, and
- under use of an orientation assembly, giving at least two different angular orientations of said billet, in a given longitudinal position of said billet, preferably by lifting said billet towards a protruded position in which it protrudes at least partly above its conveying path, and preferably by rotating said billet around its main axis, and
- under use of a sensing system, inspecting at least part of said peripheral radial surface, in each angular configuration, in particular carrying out simultaneously a scanning of surface state defects of said billet as well as a bow measurement of said billet; and
- transmitting information related to said representative parameters, towards said control module (8).

11. A method according to claim 10, wherein inspecting at least part of said peripheral radial surface, in each angular configuration, comprises
- moving sensing system along said billet immobilised in a first angular configuration, according to a first direction, and
- rotating said billet so as to place said billet in a second angular configuration, and
- moving sensing means along said billet immobilised in said second angular configuration, according to a second direction opposite to the first one; and
- optionnaly rotating said billet so as to place said billet in a third angular configuration and moving sensing means along said billet immobilised in said third angular configuration, according to said first direction.

12. A method according to any of claims 10 or 11, wherein it further comprises determining the location of at least one so-called defect region of said billet, upon receipt of said information from said sensing system and, preferably, removing said defect region(s) upon the basis of data related to said unique identifier and upon the basis of said location of said defect region(s).

13. A method according to any of claims 10 to 12, further comprising, in each angular configuration, positioning sensors, which are part of sensing system, around said billet so that sensing beams of said sensors are projected towards said billet and so that two adjacent beams overlap at the surface of said billet.

14. A method according to any of claims 10 to 13, wherein said determining the location of at least one so-called defect region comprises, under control of said control module (8), an assessment of the detected defects and a decision whether a defect is acceptable or unacceptable.

15. Casthouse plant, comprising a manufacturing zone (1000) for manufacturing billets, as well as a monitoring installation (I) according to any of claims 1 to 9.
